# EUROPÄISCHE PATENTSCHRIFT

(11) **EP 3 159 308 B1**
(45) Veröffentlichungstag und Bekanntmachung des Hinweises auf die Patenterteilung: **13.09.2017**
(21) Anmeldenummer: 15190324.2
(22) Anmeldetag: 19.10.2015
(51) Int. Cl.: C02F 1/00, C02F 1/66, C02F 1/70, C02F 1/76, C02F 101/34, C02F 103/36

(54) **AUFARBEITUNG DES ABWASSERS AUS DER ISOPHORON (IP) PRODUKTION MIT NEUTRALISATION, FILTRATION UND NACHGESCHALTETEM CHEMISCHEN OXIDATIONSVERFAHREN**
TREATMENT OF WASTE WATER FROM ISOPHORONE (IP) PRODUCTION WITH NEUTRALIZATION, FILTRATION AND DOWNSTREAM CHEMICAL OXIDATION METHOD
TRAITEMENT DES EAUX RÉSIDUAIRES PROVENANT DE LA PRODUCTION D'ISOPHORONE (IP) SELON LE PROCÉDÉ DE NEUTRALISATION, FILTRATION ET OXYDATION CHIMIQUE EN AVAL

(43) Veröffentlichungstag der Anmeldung: 26.04.2017
(73) Patentinhaber: Evonik Degussa GmbH, 45128 Essen (DE)
(72) Erfinder: CHANG, Yue, 64297 Darmstadt (DE); KRECZINSKI, Manfred, 44652 Heme (DE); MAIER, Martin, 44625 Heme (DE); WOYCIECHOWSKI, Matthias, 63505 Langenselbold (DE)

(56) Entgegenhaltungen:
- DE-A1- 4 428 413

## Beschreibung

Die Erfindung betrifft die Aufarbeitung des Abwassers aus der Isophoron (IP) Produktion mit Neutralisation, Filtration und nachgeschalteter chemischer Oxidationsverfahren und anschließender Reduktion.

Aus der WO2012/076314 ist ein Verfahren zur Herstellung von Isophoron (3,5,5-Trimethyl-2-cyclohexen-1-on) bekannt.

Aus der WO2012/076314 und der WO 2012/156187 ist ein Verfahren zur Herstellung von Isophoron bekannt, wobei das Wasser aus dem Sumpf der destillativen Aufarbeitung der wässrigen Fraktion einer Entspannungsverdampfung unterworfen wird und das entstehende gereinigte Wasser in den Prozess zur Herstellung von Isophoron zurückgeführt wird. Das entstandene Abwasser wird nicht weiter gereinigt.

Aus der EP Anmeldenummer 14195357.0-1351 ist ein Verfahren zur Aufarbeitung von verunreinigtem Abwasser aus der Herstellung von Isophoron (IP), Isophoronnitril (IPN) und Isophorondiamin (IPDA) beschrieben, wobei das Abwasser aus der Herstellung von Isophoron durch eine Oxidation aufgearbeitet werden kann. Ein anderes Verfahren zur Aufbereitung von Isophoronabwasser ist aus der DE4428413A1 bekannt. Aufgabe war es, die Abwasserqualität im Gegensatz zum Stand der Technik zu verbessern.

Es wurde gefunden, dass die Feststoffbildung aus dem Abwasser der Isophoron Produktion durch eine Neutralisation mittels pH-Verschiebung von pH 12 nach pH 6.5 bis 8.5 verstärkt wird, und die ausgefällten Feststoffe durch eine Filtration separiert werden können, sowie die gelösten organischen Inhaltstoffe im Abwasser durch eine chemische Oxidation aufgeschlossen werden können. Durch diese Behandlung kann die biologische Abbaubarkeit des Abwassers aus der IP Produktion wesentlich verbessert werden.

Gegenstand der Erfindung ist ein Verfahren zur Aufarbeitung des Abwassers aus der Isophoron Produktion durch
A) Neutralisation des alkalischen Abwassers aus der Isophoron Produktion bis zu einem pH-Wert von 6.5 bis 8,5;
B) Filtration des aus der Neutralisation erhaltenen Gemisches aus Flüssigkeit und Feststoffen;
C) Oxidation des aus der Filtration erhaltenen Filtrats;
D) Reduktion des Oxidationsmittels im Abwasser aus der Oxidation.

### Neutralisation A)

Das Abwasser aus der Isophoron Produktion ist ein Abwasser, indem Feststoffe und vielfältige organische komplexe Verbindungen enthalten sind. Dieses Abwasser ist stark basisch, weist meistens einen pH Wert von über 13 auf. Daher wird das Abwasser aus der IP Produktion, bevorzugt nach dessen destillativen Aufarbeitung, wie z.B. in der WO2012/076314 und der WO 2012/156187 beschrieben, in einem ersten Schritt einer Neutralisation unterworfen.
Während der Abkühlung des Abwassers bilden organische Verbindungen Feststoffe. Diese Feststoffbildung tritt verstärkt auf, wenn sich der pH-Wert des Abwassers in Richtung neutraler Bereich (pH 7) verschiebt. Erfindungsgemäß wird eine Neutralisierung vorgeschaltet, bevor das Abwasser in städtische Kanalisationen abgeleitet wird, weil der pH Bereich für die indirekte Abwassereinleitung üblicherweise von 6,5 bis 8,5 beträgt. Außerdem, ist das Abwasser biologisch nur beschränkt abbaubar, d.h. < 60%, auch nach langen Adaptionszeiten in der städtischen Kläranlagen.
Im Stand der Technik wie in der WO2012/076314 und der WO 2012/156187, wird das Abwasser aus der Produktion wie dort beschrieben aufgearbeitet, und in die Kanalisation abgeleitet.

Es wurde gefunden, dass ausreichende Mengen von Feststoffen bei pH-Werten von 6,5 - 8,5 gebildet werden können. Sowohl Inlineverfahren als auch stationäre Neutralisationsverfahren können hierzu angewendet werden. Bei Inline Neutralisationsverfahren werden die Säuren über einen statischen Mischer zu dem Abwasser zugemischt. Bei dem stationären Neutralisationsverfahren werden die Säuren mit Hilfe eines Rührwerkes dem Abwasser in einem Behälter beigemischt.

Das IP Abwasser ist ein pufferndes Abwasser, welches nach der Prozessstabilität vor dem Abwasserstripper sehr stark abhängig ist, so dass das stationäre Neutralisationsverfahren hierfür bevorzugt ist.

Als Säuren können alle mineralischen und organischen Säuren können zur Neutralisation eingesetzt werden. Für eine effiziente Neutralisation wird die Schwefelsäure hierfür bevorzugt.

Im Allgemeinen kann die Neutralisation erfindungsgemäß unter Druck oder drucklos bei Temperaturen von 0 bis 100 °C und bei einem pH-Wert von 6,5 bis 8,5 durchgeführt werden.

Die Neutralisation wird bevorzugt drucklos im Temperaturbereich von 20 - 40°C und bei einem pH-Wert von 7 bis 7,5 durchgeführt, besonders bevorzugt bei pH von 7,0 - 7,25, wobei die maximale Menge von Feststoffen gebildet werden können.

Bevorzugt erfolgt die Dosierungen von Säuren zweistufig, indem die erste Dosierungsstufe mit konzentrierter Säure, bevorzugt 90-96 Gew.-%ige H₂SO₄ oder 30-35% Gew.-ige HCl, nah über dem Scheitelpunkt, der nach dem Betriebszustand zwischen pH 11-10,5 liegt, der pH Absenkung durchgeführt wird, und in der zweiten Dosierungsstufe dann mit verdünnter Säure, bevorzugt 5-15 Gew.-%ige H₂SO₄ oder 5-10 Gew.-%ige HCl langsam an pH 7-7,2 angenäht wird.

### Filtration B)

In einem zweiten Schritt B) erfolgt die Filtration des aus der Neutralisation erhaltenen Gemisches aus Flüssigkeit und Feststoffen.

Die Filtration kann in einem oder mehrere Filtrationsapparaturen durchgeführt werden. Das neutralisierte Abwasser mit gebildeten Feststoffen wird in einer drucklosen Filtration eingeleitet. Die Feststoffe sind feine Flocken, die sich unter starkem Druck oder mechanischer Belastung zerdrücken lassen. Die wässrige Phase geht schließlich mit Schwerkraft durch den Filter durch, die Feststoffe bleiben zurück. Feststoffe können weitergehend zurückgehalten werden, verursachen keine Verklebungen und Verstopfungen mehr in folgenden Apparaten und Rohrleitungen. Durch die Filtration der Feststoffe werden 20-60% organische Verbindungen in Form von Feststoffen reduziert. Die Filterkuchen können nach einer weiteren Entwässerung gesondert aber wesentlich günstiger entsorgt werden.

Die Feststoffe lassen sich bei der Filtrationen sehr gut abtrennen. Die Maschenweite der Filter kann von 0,1 - 25µm variieren. Bevorzugt sind Filter mit 0,5 - 2 µm. Die Filtration kann mit Kerzenfilter, Beutelfilter oder ähnliches erfolgen. Bevorzugt ist der Beutelfilter in Gehäuse mit multiplen Einsätzen.

Die Filtration kann mit und ohne Druck bei Temperaturen von 15 bis 45°C in einer Apparatur oder mehreren Apparaturen, wobei diese parallel und/oder hintereinander angeordnet sein können, durchgeführt werden. Bevorzugt wird die Filtration bei Temperaturen von 20 bis 30°C durchgeführt.

Es ist bevorzugt, die Filtration ohne Druck und bei Temperaturen von 20 bis 30°C durchzuführen. Die Feststoffe lassen sich bei einer drucklosen Filtration mit einer Maschenweite unter 10µm, insbesondere bei 1µm (Ultra- bis Nanofiltration) sehr gut abtrennen. Die drucklose Filtration kann mit einem Beutelfilter, Kerzenfilter o.ä. erfolgen. Die wässrige Phase geht durch den Filter durch, die Feststoffe bleiben zurück, bilden Filterkuchen. Bevorzugt ist der Beutelfilter in einem Gehäuse mit multiplen Einsätzen.

Je nach Filtrationsverfahren, können die Filterkuchen zum Schluss des Filtrationsvorgangs mittels einer Druckluftzuleitung entwässert werden. Der Schluss des Filtrationsvorgangs ist merkbar, wenn sich der Druck im Filtergehäuse signifikant steigert. Die Filterkuchen werden als Sonderabfall entsorgt.

Das Filtrat verursacht keine Verklebungen und Verstopfungen in folgenden Apparaten und Rohrleitungen. Durch die Filtration der Feststoffe werden bis zu 60% der gesamten organischen Verbindungen, gemessen als CSB nach DIN 38 409-H41, alternativ Hach-Lange Küvettentests (gesamter Chemische Sauerstoff Bedarf), reduziert.

### Oxidation C)

Durch eine oxidative Vorbehandlung werden organische komplexe Verbindungen im Abwasser aufgeschlossen und im hauptsächlich zu CO₂ und Wasser direkt oxidiert.

Das Filtrat enthält weitere organische Verbindungen, die durch vorherige Ausfällung und Filtration nicht reduziert werden können. Die organische Verbindungen werden in einem dritten Schritt C) über eine chemische Oxidation durch Zugabe von Oxidationsmitteln, bevorzugt Natriumhypochlorit behandelt. Das Filtrat wird in den Reaktor der Oxidation eingeleitet, in deren Zulaufleitung eine 5-15 Gew.-%ige Lösung mit mindestens einem Oxidationsmittel, bevorzugt Natriumhypochlorit-Lösung, zugegeben wird. Die pH Reaktionsbereich während der Oxidation variiert zwischen pH 7-8. Die Reaktionstemperatur beträgt 20-45°C. Die eingesetzten Mengen der Lösung mit dem Oxidationsmittel, bevorzugt Natriumhypochlorit-Lösung, sind abhängig von der Konzentration der Lösung und den Mengen der organischen Verbindungen, gemessen als CSB. Das Dosierbereich beträgt bevorzugt 50-85 mL (max. 100mL) pro g CSB mit 10 Gew.-%ige NaOCl-Lösung.
Die Reaktion kann ein- oder mehrstufig als Durchlaufprozess kontinuierlich oder als Batchprozess durchgeführt werden. Die hydraulische Aufenthaltszeit beträgt 2 bis 8 Stunden. Ein mehrstufiges kontinuierliches Reaktorkonzept ist hier besonders bevorzugt, wobei mindestens zwei Reaktoren nacheinander angeordnet sind. Während der Reaktion werden die pH- und Temperaturüberwachung sowie die Dosierung Lösung mit dem Oxidationsmittel, bevorzugt von NaOCl-Lösung, bevorzugt kontinuierlich über Online Sensoren gesteuert. Sollte die Online-Überwachung nicht möglich sein, können regelmäßige Kontrollproben analysiert werden, um den Prozess optimal steuern zu können.

Sollten andere Abwässer zu IP Abwasser aus Schritt B) in die Oxidation hinzukommen, müssen entsprechende pH Anpassung zur Reaktion geprüft und berücksichtig werden. In dem vorhandenen Fall werden Abwässer aus der Produktion von Isophoronnitril (IPN) und/oder Isophorondiamin (IPDA) zu IP Abwasser zugeleitet. Da sowohl gebundene als auch freie Cyanide in Abwässer von IPN und IPDA vorhanden sind, muss die chemische Oxidation mit Zugabe von Oxidationsmitteln, bevorzugt Natriumhypochlorit bei pH > 9,5 erfolgen, sodass kein HCN Gase während der Oxidation ausgestrippt wird.

### Reduktion D)

Nach der Oxidation wird das restliche Oxidationsmittel in einem vierten Schritt D) reduziert. Es eignen sich prinzipiell Reduktionsmittel, mit denen das verwendete Oxidationsmittel reduziert werden kann.

Das bevorzugte Natriumhypochlorit wird mit Na₂SO₃ reduziert, damit Natriumhypochlorit als Oxidationsmittel in nachfolgenden Prozessen keine unerwarteten Reaktionen auslöst.
Im besten Fall, sind organische Verbindungen durch Hypochlorit-Verbindungen in NH₄, CO₂ und H₂O sowie halogenierter Verbindungen oxidiert. Im normalen Fall werden komplexe organische Verbindungen in einfachere organische Verbindungen, NH₄, CO₂, H₂O sowie halogenierter Verbindungen oxidiert.

Im Vergleich zu frisch anfallendem und nicht behandeltem Abwasser, verbessert dieses Verfahren die gesamt biologischen Abbaubarkeit des IP Abwassers um 10-20 %, gemessen nach Standardmessverfahren (Zahn-Wellens-Test DIN EN ISO 9888 bzw. OECD302B).

## Patentansprüche

1. Verfahren zur Aufarbeitung des Abwassers aus der Isophoron Produktion durch
A) Neutralisation des alkalischen Abwassers aus der Isophoron Produktion bis zu einem pH-Wert von 6.5 bis 8,5;
B) Filtration des aus der Neutralisation erhaltenen Gemisches aus Flüssigkeit und Feststoffen;
C) Oxidation des aus der Filtration erhaltenen Filtrats;
D) Reduktion des Oxidationsmittels im Abwasser aus der Oxidation C).

2. Verfahren nach Anspruch 1 **dadurch gekennzeichnet, dass** die Neutralisation A) durch ein Inlineverfahren oder durch ein stationäres Neutralisationsverfahren durchgeführt wird.

3. Verfahren nach mindestens einem der vorherigen Ansprüche, **dadurch gekennzeichnet, dass** die Neutralisation A) durch ein stationäres Neutralisationsverfahren durchgeführt wird, wobei die Säuren mit Hilfe eines Rührwerkes dem Abwasser in einem Behälter beigemischt werden.

4. Verfahren nach mindestens einem der vorherigen Ansprüche, **dadurch gekennzeichnet, dass** die Neutralisation A) drucklos im Temperaturbereich von 20-40°C und bei einem pH-Wert von 7 bis 7,5 durchgeführt wird, bevorzugt bei pH von 7,0 - 7,25.

5. Verfahren nach mindestens einem der vorherigen Ansprüche, **dadurch gekennzeichnet, dass** bei der Neutralisation A) die Dosierungen von Säuren zweistufig erfolgt, indem die erste Dosierungsstufe mit konzentrierter Säure nah über den Scheitelpunkt, der nach dem Betriebszustand zwischen pH 11-10,5 liegt, der pH Absenkung durchgeführt wird, und in der zweiten Dosierungsstufe danach mit verdünnter Säure langsam an pH 7-7,2 angenäht wird.

6. Verfahren nach mindestens einem der vorherigen Ansprüche, **dadurch gekennzeichnet, dass** bei der Neutralisation A) die Dosierungen von Säuren zweistufig, indem die erste Dosierungsstufe mit 90-96 Gew.-%ige H₂SO₄ oder 30-35% Gew.-ige HCl, nah über dem Scheitelpunkt, der nach dem Betriebszustand zwischen pH 11-10,5 liegt, der pH Absenkung durchgeführt wird, und in der zweiten Dosierungsstufe dann mit bevorzugt 5-15 Gew.-%ige H₂SO₄ oder 5-10 Gew.-%ige HCl langsam an pH 7-7,2 angenäht wird.

7. Verfahren nach mindestens einem der vorherigen Ansprüche, **dadurch gekennzeichnet, dass** die Filtration B) mit oder ohne Druck bei Temperaturen von 15 bis 45 °C durchgeführt wird.

8. Verfahren nach mindestens einem der vorherigen Ansprüche, **dadurch gekennzeichnet, dass** die Filtration B) ohne Druck und bei Temperaturen von 20 bis 30 °C durch Filter mit einer Maschenweite unter 10µm, insbesondere bei 1µm, durchgeführt wird.

9. Verfahren nach mindestens einem der vorherigen Ansprüche, **dadurch gekennzeichnet, dass** während der Oxidation C) der pH Reaktionsbereich variiert zwischen pH 7-8 und die Reaktionstemperatur zwischen 20-45°C variiert.

10. Verfahren nach mindestens einem der vorherigen Ansprüche, **dadurch gekennzeichnet, dass** die Oxidation C) durch eine 5-15 Gew.-%ige Lösung mit mindestens einem Oxidationsmittel, durchgeführt wird.

11. Verfahren nach mindestens einem der vorherigen Ansprüche, **dadurch gekennzeichnet, dass** die Oxidation durch eine 5-15 Gew.-%ige Lösung mit Natriumhypochlorit durchgeführt wird.

12. Verfahren nach mindestens einem der vorherigen Ansprüche, **dadurch gekennzeichnet, dass** die Oxidation C) mehrstufig als Durchlaufprozess kontinuierlich erfolgt.

13. Verfahren nach mindestens einem der vorherigen Ansprüche, **dadurch gekennzeichnet, dass** das Natriumhypochlorit im Schritt D) mit Na₂SO₃ reduziert wird.

14. Verfahren nach mindestens einem der vorherigen Ansprüche, **dadurch gekennzeichnet, dass** Abwässer aus der Produktion von Isophoronnitril (IPN) und/oder Isophorondiamin (IPDA) zum Isophoron Abwasser aus Schritt B) der Oxidation C) zugeleitet werden, wobei die Oxidation mit Zugabe von Oxidationsmitteln, bevorzugt Natriumhypochlorit, bei pH > 9,5 erfolgt.

## Claims

1. Method of treating the wastewater from isophorone production by
A) neutralization of the alkaline wastewater from isophorone production to a pH of 6.5 to 8.5;
B) filtration of the mixture of liquid and solids obtained from the neutralization;
C) oxidation of the filtrate obtained from the filtration;
D) reduction of the oxidant in the wastewater from the oxidation C).

2. Method according to Claim 1, **characterized in that** the neutralization A) is carried out by an in-line method or by a stationary neutralization method.

3. Method according to at least one of the preceding claims, **characterized in that** the neutralization A) is carried out by a stationary neutralization method, wherein the acids are admixed to the wastewater in a container using a stirrer.

4. Method according to at least one of the preceding claims, **characterized in that** the neutralization A) is carried out at atmospheric pressure in the temperature range of 20-40°C and at pH 7 to 7.5, preferably at pH 7.0 - 7.25.

5. Method according to at least one of the preceding claims, **characterized in that** in the neutralization A) the metering of acids is effected in two stages such that the first metering stage is carried out with concentrated acid just above the vertex of the pH lowering which as per the operating state is between pH 11-10.5 and in the second metering stage dilute acid is then used to slowly approach pH 7-7.2.

6. Method according to at least one of the preceding claims, **characterized in that** in the neutralization A) the metering of acids is effected in two stages such that the first metering stage is carried out with 90-96 wt% H₂SO₄ or 30-35 wt% HCl just above the vertex of the pH lowering which as per the operating state is between pH 11-10.5 and in the second metering stage preferably 5-15 wt% H₂SO₄ or 5-10 wt% HCl is then used to slowly approach pH 7-7.2.

7. Method according to at least one of the preceding claims, **characterized in that** the filtration B) is carried out at atmospheric pressure or superatmospheric pressure at temperatures of 15°C to 45°C.

8. Method according to at least one of the preceding claims, **characterized in that** the filtration B) is carried out at atmospheric pressure at temperatures of 20°C to 30°C using a filter with a pore size below 10 µm, in particular of 1 µm.

9. Method according to at least one of the preceding claims, **characterized in that** the reaction pH range during the oxidation C) varies between pH 7-8 and the reaction temperature varies between 20-45°C.

10. Method according to at least one of the preceding claims, **characterized in that** the oxidation C) is carried out by a 5-15 wt% solution comprising at least one oxidant.

11. Method according to at least one of the preceding claims, **characterized in that** the oxidation is carried out by a 5-15 wt% solution comprising sodium hypochlorite.

12. Method according to at least one of the preceding claims, **characterized in that** the oxidation C) is carried out in continuous fashion as a multistage through-flow process.

13. Method according to at least one of the preceding claims, **characterized in that** the sodium hypochlorite is reduced with Na₂SO₃ in step D).

14. Method according to at least one of the preceding claims, **characterized in that** wastewaters from the production of isophoronenitrile (IPN) and/or isophoronediamine (IPDA) are fed into the isophorone wastewater from step B) into the oxidation C), the oxidation being effected with addition of oxidants, preferably sodium hypochlorite, at pH > 9.5.

## Revendications

1. Procédé de traitement de l'eau résiduaire de la production d'isophorone par
A) la neutralisation de l'eau résiduaire alcaline de la production d'isophorone jusqu'à un pH de 6,5 à 8,5 ;
B) la filtration du mélange de liquide et de solides obtenu par la neutralisation ;
C) l'oxydation du filtrat obtenu par la filtration ;
D) la réduction de l'oxydant dans l'eau résiduaire de l'oxydation C).

2. Procédé selon la revendication 1, **caractérisé en ce que** la neutralisation A) est réalisée par un procédé en ligne ou par un procédé de neutralisation stationnaire.

3. Procédé selon au moins l'une quelconque des revendications précédentes, **caractérisé en ce que** la neutralisation A) est réalisée par un procédé de neutralisation stationnaire, les acides étant incorporés dans l'eau résiduaire dans un contenant à l'aide d'un agitateur.

4. Procédé selon au moins l'une quelconque des revendications précédentes, **caractérisé en ce que** la neutralisation A) est réalisée sans pression dans la plage de température allant de 20 à 40 °C et à un pH de 7 à 7,5, de préférence à un pH de 7,0 à 7,25.

5. Procédé selon au moins l'une quelconque des revendications précédentes, **caractérisé en ce que**, lors de la neutralisation A), l'introduction d'acides a lieu en deux étapes, la première étape d'introduction étant réalisée avec un acide concentré juste au-dessus du pic, qui se situe selon l'état d'exploitation entre pH 11 et 10,5, de la diminution du pH, puis, lors de la deuxième étape d'introduction, un pH de 7 à 7,2 étant approximé lentement avec un acide dilué.

6. Procédé selon au moins l'une quelconque des revendications précédentes, **caractérisé en ce que**, lors de la neutralisation A), l'introduction d'acides a lieu en deux étapes, la première étape d'introduction étant réalisée avec H₂SO₄ à 90-96 % en poids ou HCl à 30-35 % en poids juste au-dessus du pic, qui se situe selon l'état d'exploitation entre pH 11 et 10,5, de la diminution du pH, puis, lors de la deuxième étape d'introduction, un pH de 7 à 7,2 étant approximé lentement avec de préférence H₂SO₄ à 5-15 % en poids ou HCl à 5-10 % en poids.

7. Procédé selon au moins l'une quelconque des revendications précédentes, **caractérisé en ce que** la filtration B) est réalisée avec ou sans pression à des températures de 15 à 45 °C.

8. Procédé selon au moins l'une quelconque des revendications précédentes, **caractérisé en ce que** la filtration B) est réalisée sans pression et à des températures de 20 à 30 °C au travers d'un filtre ayant une largeur de mailles inférieure à 10 µm, notamment de 1 µm.

9. Procédé selon au moins l'une quelconque des revendications précédentes, **caractérisé en ce que**, pendant l'oxydation C), le pH de la zone de réaction varie entre pH 7 et 8 et la température de réaction varie entre 20 et 45 °C.

10. Procédé selon au moins l'une quelconque des revendications précédentes, **caractérisé en ce que** l'oxydation C) est réalisée par une solution à 5-15 % en poids avec au moins un oxydant.

11. Procédé selon au moins l'une quelconque des revendications précédentes, **caractérisé en ce que** l'oxydation est réalisée par une solution à 5-15 % en poids avec de l'hypochlorite de sodium.

12. Procédé selon au moins l'une quelconque des revendications précédentes, **caractérisé en ce que** l'oxydation C) a lieu en continu en plusieurs étapes sous la forme d'un procédé à écoulement.

13. Procédé selon au moins l'une quelconque des revendications précédentes, **caractérisé en ce que** l'hypochlorite de sodium est réduit à l'étape D) avec Na₂SO₃.

14. Procédé selon au moins l'une quelconque des revendications précédentes, **caractérisé en ce que** les eaux résiduaires de la production d'isophorone-nitrile (IPN) et/ou d'isophorone-diamine (IPDA) sont introduites dans l'eau résiduaire d'isophorone issue de l'étape B) dans l'oxydation C), l'oxydation ayant lieu avec ajout d'oxydants, de préférence d'hypochlorite de sodium, à pH > 9,5.
